# FASCICULE DE BREVET EUROPEEN

(11) **EP 1 207 632 B1**
(45) Date de publication et mention de la délivrance du brevet: **21.02.2007**
(21) Numéro de dépôt: 01402849.2
(22) Date de dépôt: 05.11.2001
(51) Int. Cl.: H04B 7/185

(54) **Procédé d'adressage dans un réseau d'accès ou d'infrastructure satellites pouvant servir de support à des transferts de données en mode non-connecté**
Adressierungsverfahren in einem Satelliten Zugriff- oder Infrastruktur- netzwerk für Datenübertragung in einem nicht geschaltetem Modus
Addressing method in a satellite access or infrastructure network which can be used for data transfer in a non connected mode

(30) Priorité: 20.11.2000 FR 0014941
(43) Date de publication de la demande: 22.05.2002
(73) Titulaire: ALCATEL, 75008 Paris (FR)
(72) Inventeur: Faineant, Virginie, 92370 Chaville (FR); Josset, Sébastien, 31100 Toulouse (FR); Feniou, Alain, 92400 Courbevoie (FR); Bareux, Gabriel, 75011 Paris (FR)
(74) Mandataire: Sciaux, Edmond

(56) Documents cités:
- WO-A-97/20413
- WO-A-98/16046
- WO-A-99/09707

## Description

La présente invention concerne un procédé d'adressage dans un réseau d'accès ou d'infrastructure satellites, un procédé de détermination et d'optimisation dynamique d'un label d'adressage, un système de télécommunication par satellites mettant en oeuvre ces procédés et les composants d'un tel système.

Les systèmes de télécommunication connaissent depuis quelques années une évolution apparemment inéluctable vers des transferts de données selon le protocole Internet (souvent désigné IP), notamment parce que celui-ci offre l'interactivité manquant aux systèmes de télédiffusion conventionnels. Voir par exemple : WO-A-48/16046 (Microsoft).

Cette évolution a concerné en premier lieu les réseaux terrestres, mais elle s'étend aujourd'hui aux réseaux basés sur des infrastructures de satellites.

Pour répondre à ce nouveau besoin, les réseaux satellites doivent donc faire face à de nouvelles difficultés techniques.

On a déjà proposé des solutions pour transporter des paquets de données de type IP sur un réseau par satellites, mais ces solutions, résultant souvent de l'adaptation de systèmes initialement dédiés au transport de flux vocaux point à point ou de flux vidéo à diffusion générale (on dit également "broadcastés"), mettent en place des protocoles non optimisés.

En effet, de manière traditionnelle, un système de télécommunication par satellite offre des services de diffusion, c'est-à-dire de transmission de données en sens unique, d'un émetteur vers un ensemble de destinataires, et des services de communication en mode circuit, c'est-à-dire d'un point donné à un autre point donné moyennant un "fil" ou "circuit" virtuel établi temporairement entre les deux points en vue d'une communication entre eux.

Dans le monde Internet, les services de communication d'un utilisateur à un autre requièrent l'établissement d'un double circuit spécifique depuis chaque utilisateur vers leur serveur d'accès Internet commun, de sorte qu'une connexion d'un utilisateur à un autre utilisateur via le système satellite engendre un double bond, c'est-à-dire une double utilisation du satellite. Et ce phénomène de bond multiple s'accentue si les deux utilisateurs ne sont pas enregistrés auprès du même serveur d'accès, car des bonds sont alors nécessaires pour relier les serveurs d'accès entre eux.

La même difficulté survient lorsqu'il s'agit d'envoyer des données à un groupe déterminé d'utilisateurs, que ce soit selon un service de diffusion pure, service qui est souvent désigné par « multidestinataire » ou « multicast » (par comparaison avec le service broadcast qui vise la totalité des utilisateurs du système), ou selon une communication au sein d'un sous-réseau privé virtuel qui regroupe certains utilisateurs. Pour une diffusion de type multidestinataire ou en sous-réseau virtuel, les paquets destinés à plusieurs utilisateurs sont dupliqués en autant de destinataires, et les données transitent par autant de canaux de trafic dédiés, ou circuits, ce qui augmente inutilement la charge du réseau.

Un autre impératif à prendre en considération est que les réseaux par satellite offrant des possibilités de transactions selon le protocole Internet doivent pouvoir s'intégrer de manière transparente aux réseaux terrestres, afin que les utilisateurs puissent atteindre toute adresse Internet du réseau mondial, en émission aussi bien qu'en réception de données, sans se préoccuper du chemin emprunté par les paquets de données pour assurer la transmission, et bénéficier ainsi de tous les services Internet déjà disponibles sur les réseaux terrestres.

Un des buts de la présente invention est de proposer un procédé d'adressage qui permet, dans un système de télécommunication par satellites, d'envoyer des données soit à un unique destinataire, soit à un groupe de destinataires, et ce sans qu'il ne soit nécessaire d'établir de connexion.

Un autre but de la présente invention est de permettre la création aisée de groupes multidestinataire et de sous-réseaux dans un système de télécommunication par satellites, sans duplication de paquets en fonction du nombre de destinataires concernés par un envoi de données.

La présente invention a aussi pour but de minimiser les ressources radio habituellement nécessaires à la signalisation des paquets de données utilisés pour établir une connexion entre l'émetteur et le récepteur en permettant au système satellite de fonctionner en mode non-connecté.

L'invention vise également à rendre transparente l'intégration d'un système de télécommunication par satellites dans un réseau de télécommunications terrestre.

A cet effet, l'invention a tout d'abord pour objet un procédé d'adressage de paquets de données dans un réseau d'accès ou d'infrastructure satellites servant de support à des sous-réseaux, tels que des sous-réseaux logiques IP, des réseaux privés virtuels ou des groupes multidestinataires, regroupant différents postes terminaux, dans lequel chaque paquet de données est associé à une entête d'adressage et dans lequel chaque poste terminal du réseau est rattaché à un terminal satellite ou à une station de connexion qui se trouve dans la zone de couverture d'un spot déterminé d'un satellite déterminé, **caractérisé en ce que** l'entête d'adressage de chaque paquet de données contient en outre un champ "label" contenant un identifiant caractéristique d'un sous-réseau virtuel auquel appartient ledit poste terminal et du spot dans lequel se trouve le terminal satellite ou la station de connexion auquel est rattaché ledit poste terminal.

Dans un mode de mise en oeuvre particulier, ce procédé est basé sur un mode non connecté entre le terminal satellite émetteur, ou la station de connexion émettrice et le terminal satellite récepteur ou la station de connexion réceptrice.

Dans ce cas, l'envoi des paquets de données s'effectue sans connexion entre émetteur et récepteur.

Suivant une caractéristique particulière de ce procédé, les postes terminaux reliés aux terminaux satellites ou aux stations de connexion sont constitués par des terminaux utilisateurs, des routeurs, des serveurs de données ou de services et notamment des serveurs de résolution d'adresses.

On comprend que, dans le réseau utilisé pour mettre en oeuvre le procédé selon l'invention, les terminaux utilisateurs, les routeurs, les serveurs de données ou de services communiquent avec le ou les satellites du système de télécommunications par l'intermédiaire de terminaux satellites ou de stations de connexion.

Toutefois, dans un mode de réalisation particulier, un poste terminal et un terminal satellite ou un poste terminal et une station de connexion peuvent ne constituer qu'un seul et même équipement en étant réunis dans un même boîtier. En particulier, un terminal utilisateur et un terminal satellite peuvent former un appareil unique portatif.

La solution proposée par l'invention permet, dans un système de télécommunications par satellites, d'adresser des groupes d'utilisateurs par l'intermédiaire de labels, donc en tirant profit d'un des avantages majeurs des satellites, à savoir leur capacité à diffuser des données pour de nombreux utilisateurs en ne mobilisant ni plus d'énergie, ni plus de ressources que pour un seul utilisateur.

Grâce à l'invention, les paquets de données transitant par un satellite sont directement dirigés par le satellite ou son centre de gestion dans le spot couvrant le terminal satellite auquel le destinataire des paquets de données est relié.

L'invention a également pour objet un procédé de détermination et d'optimisation dynamique d'un label à partir de l'adresse d'un poste terminal cible, destinataire d'un paquet de données.

Pour déterminer l'adresse physique (ou matérielle) d'un poste terminal cible, on connaît déjà le protocole de résolution d'adresses IP (protocole Internet) consistant à émettre en mode diffusion (ou broadcast), donc à destination de tous les postes terminaux du réseau, un paquet de données de type "Requête ARP" contenant notamment l'adresse matérielle de l'émetteur et l'adresse protocole (ou adresse IP) du noeud cible. Chaque poste terminal voit passer ce paquet de données de type requête mais seul le poste terminal cible se reconnaît par son adresse protocole et renvoie à l'émetteur un paquet de données similaire, de type "Réponse ARP", dans lequel il a renseigné un champ prévu pour sa propre adresse matérielle.

L'émetteur peut ainsi récupérer l'adresse matérielle du poste terminal cible et lui adresser ensuite des paquets de données.

L'invention part de cette méthode connue de résolution d'adresses pour fournir un procédé dynamique de détermination de labels, en vue de mettre en oeuvre le procédé d'adressage de paquets de données défini ci-dessus dans un système de télécommunications par satellites.

Selon l'invention, le procédé de détermination et d'optimisation de labels **se caractérise en ce qu'il** consiste à installer un serveur centralisé de détermination de labels (désigné par la suite "serveur de labels") chez chaque serveur d'accès Internet utilisant le réseau satellite, à communiquer le label correspondant à ce serveur de labels à chaque terminal satellite ou chaque station de connexion du réseau au moment de l'enregistrement, auprès du serveur d'accès Internet, d'un utilisateur dont le terminal utilisateur est relié à ce terminal satellite ou à cette station de connexion, et à faire émettre par le terminal satellite (ou par la station de connexion) auquel (à laquelle) est relié le terminal utilisateur d'un utilisateur désirant envoyer des données vers un poste terminal cible relié à un autre terminal satellite ou à une autre station de connexion, à destination du serveur de labels de son serveur d'accès et en utilisant le label correspondant au serveur de labels, un paquet de données de type "Requête de label" contenant l'adresse IP du poste terminal cible, à faire émettre par le serveur de labels, à destination du terminal satellite ou de la station de connexion émetteur et en utilisant le label correspondant audit émetteur, un paquet de données de type "Réponse de label" contenant le label du sous-réseau auquel appartient le poste terminal cible.

Selon une caractéristique particulière de l'invention, le paquet de données de type "Réponse de label" fourni par le serveur de labels est établi en fonction de la localisation matérielle du poste terminal cible.

On distingue ainsi selon que le poste terminal cible :
- est accessible par le réseau satellites et est enregistrée chez le même serveur d'accès Internet que celui de l'émetteur,
- est accessible par le réseau satellites mais est enregistrée chez un autre serveur d'accès Internet que celui de l'émetteur,
- est inaccessible par le réseau satellite et requiert un passage par un routeur du même serveur d'accès Internet que celui de l'émetteur,
- est inaccessible par le réseau satellite et requiert un passage par un routeur d'un autre serveur d'accès Internet que celui de l'émetteur.

Dans l'hypothèse où le passage par au moins un routeur intermédiaire appartenant au même réseau de satellite est requis, l'invention propose également un procédé d'optimisation du routage.

Ce procédé se caractérise par le fait que lors d'une interrogation du serveur de labels, par soumission d'un paquet de données de type "Requête de label" correspondant à une adresse de poste terminal cible, si le serveur de labels trouve un label d'un routeur comme réponse à la requête, ledit serveur de labels adresse audit routeur un paquet de données de type "Optimisation de label" contenant l'adresse du poste terminal cible comme adresse destinataire et toute station de connexion appartenant au réseau de satellites qui est sollicitée par son routeur pour faire suivre ce paquet de données de type "Optimisation de label" à un autre routeur renvoie au serveur de labels une indication selon laquelle le label de routeur à retenir pour ce poste terminal cible est le label du routeur vers lequel cette station de connexion fait suivre le paquet de données "Optimisation de label".

Ainsi, le serveur de label peut indiquer le label d'un routeur plus proche du destinataire. Le paquet d'optimisation progressant de routeur en routeur et traversant des stations de connexion successives, le serveur de labels est remis à jour à chaque nouveau routeur intermédiaire et finit par indiquer le label du routeur le plus proche du destinataire dans le réseau satellites. Les paquets de données envoyés sous ce label atteignent alors le destinataire en un seul bond dans le réseau satellites.

Selon une caractéristique particulière de ce procédé, le paquet de données de type "Optimisation de label" a une durée de vie limitée en dehors du réseau satellites, afin de s'éliminer spontanément dès lors que sa transmission d'une station de connexion à une autre est considérée comme ne pouvant plus donner lieu à une optimisation du routage.

Grâce aux labels selon l'invention, on peut adresser un groupe de terminaux et/ou de gateways, non seulement dans le cadre d'une connexion au sein d'un sous-réseau virtuel, mais également dans le cadre d'une diffusion multidestinataire.

Selon une autre caractéristique de l'invention, les paquets de données sont des contenants pouvant contenir, entre autres, des paquets IP, c'est-à-dire répondant aux normes de transfert de données sur des réseaux de type Internet.

Dans le cas du transport de protocole Internet, le procédé selon l'invention s'avère particulièrement efficace car, outre les avantages déjà mentionnés, il permet d'optimiser le protocole d'accès au satellite, comme cela sera expliqué ultérieurement.

Conformément à l'invention, chaque poste terminal du réseau satellite est vu comme appartenant à un sous-réseau virtuel. Ce sous-réseau virtuel peut n'être constitué que par ledit poste terminal, comme cela peut être le cas pour une gateway particulière telle qu'une station de connexion, un routeur, un serveur de labels ou un serveur de résolution d'adresses, ou être constitué par un groupe de postes terminaux, tels que des groupes de terminaux utilisateurs, réunis dans un réseau privé virtuel ou dans un groupe multidestinataire.

Dans la détermination du label de l'entête associé à un paquet de données, qui, comme indiqué précédemment, caractérise un sous-réseau virtuel auquel appartient le poste terminal destinataire du paquet et un spot dans lequel se trouve ledit poste terminal, deux situations peuvent se présenter :

Si le poste terminal émetteur du paquet de données est relié à un terminal satellite ou à une station de connexion enregistré(e) dans le réseau satellites et est lui-même enregistré auprès d'un serveur d'accès Internet, il dispose de toutes les informations requises pour déterminer l'identifiant constituant le label à partir de l'adresse IP (c'est-à-dire définie selon le protocole Internet) du poste terminal destinataire du paquet de données.

En revanche, si le terminal satellite du poste terminal émetteur n'est pas enregistré dans le réseau satellites ou si le terminal satellite ou la station de connexion est enregistré(e) dans le réseau mais que le poste terminal n'est pas encore enregistré auprès du serveur d'accès, il doit préalablement procéder à sa demande d'autorisation auprès d'un serveur d'accès Internet, et à cet effet il doit respecter une procédure de signalisation qui comprend notamment l'utilisation à cette fin d'un label prédéfini pour émettre un paquet de données à destination du serveur d'accès Internet. En d'autres termes, dans ce cas, l'identifiant constituant le label est prédéfini par la procédure de signalisation.

Conformément à l'invention, le label ajouté à l'entête de tout paquet de données est utilisé, d'une part, par le ou les satellites afin de transmettre les paquets de données vers les spots correspondant audit label, d'autre part par les terminaux satellites et/ou les stations de connexion afin de filtrer les paquets qui leur sont destinés.

En résumé, l'existence du label dans l'entête du paquet de données permet de tenir compte des deux faits suivants :
- un terminal satellite ou une station de connexion se situe dans la zone de couverture d'un spot donné d'un satellite donné et
- un poste terminal, c'est-à-dire un terminal utilisateur, un routeur, un serveur de données ou de services, connecté à un terminal satellite appartient à un sous-réseau virtuel donné.

Et le label obéit aux règles suivantes :
- Un ou plusieurs labels sont affectés à un sous-réseau virtuel donné.
- Mais un label n'est dédié qu'à un seul sous-réseau virtuel donné.
- Pour chaque label, le satellite connaît les différents spots qui lui sont associés.
- Chaque terminal satellite connaît les labels qui lui sont autorisés.
- A chaque adresse IP (définie selon le protocole Internet) est associé le label de son sous-réseau virtuel.

Pour la mise en oeuvre du procédé selon l'invention, il convient de prévoir la gestion des différents label, cette gestion regroupant les opérations d'allocation, de révocation, et de mise à jour des labels dans les différentes tables de résolution d'adresses du réseau.

A cet effet, l'invention prévoit une procédure d'enregistrement d'un utilisateur auprès d'un serveur d'accès Internet, procédure au cours de laquelle le serveur d'accès Internet fournit au terminal de l'utilisateur :
- un label de réception de données, qui sera utilisé par les autres postes terminaux du réseau pour envoyer des paquets de données à l'utilisateur,
- un label d'envoi de données au serveur d'accès Internet,
- un label d'accès au serveur de résolution d'adresses du serveur d'accès Internet, afin de récupérer les labels correspondants aux adresses IP avec lesquelles l'utilisateur veut se connecter.

Le détail de cette procédure d'enregistrement et les opérations d'envoi et de réception de paquets de données par le terminal de l'utilisateur seront décrits plus en détail en référence à l'exemple illustré par les dessins annexés.

L'invention a également pour objet un terminal satellite d'un système de télécommunication par satellites mettant en oeuvre le procédé décrit ci-dessus. Ce terminal est **caractérisé en ce qu'il** dispose d'une table par serveur d'accès auquel sont rattachés des terminaux utilisateurs reliés au terminal satellite, mettant en relation des adresses de terminaux utilisateurs cibles et les labels qui leurs sont associés, en ce qu'il écoute les labels de réception des sous-réseaux dont font partie les terminaux utilisateurs qui lui sont rattachés.

Selon un mode de réalisation particulier de l'invention, le terminal satellite mémorise le label d'émission de la station de connexion auquel il est rattaché, label grâce auquel il peut émettre des paquets de données diffusées vers ladite station de connexion.

Dans un autre mode de réalisation particulier, compatible avec les précédents, un poste terminal et le terminal satellite auquel il est relié ne constituent qu'un seul et même équipement en étant réunis dans un même boîtier.

Selon une variante particulière de ce mode de réalisation, le poste terminal est un terminal utilisateur qui, avec le terminal satellite, ne constitue qu'un seul et même équipement.

L'invention a encore pour objet un serveur d'accès d'un système de télécommunication par satellites mettant en oeuvre le procédé décrit ci-dessus, **caractérisé en ce qu'**il est attaché à un serveur de labels apte à fournir un label d'adressage en fonction d'une adresse de poste terminal cible d'un paquet de données.

L'invention a aussi pour objet un satellite d'un système de télécommunication par satellites mettant en oeuvre le procédé décrit ci-dessus, **caractérisé en ce qu'il** dispose d'une table mettant des labels attribués à des sous-réseaux en relation avec les spots de son système satellite, et d'un moyen pour émettre un paquet de données attaché à un label donné uniquement dans celui ou ceux de ses spots reliés audit label.

Selon l'invention, ladite table peut être contenue par le satellite, ou se trouver dans un centre de contrôle réseau.

L'invention a également pour objet une station de connexion d'un système de télécommunication mettant en oeuvre le procédé d'optimisation de routage décrit ci-dessus, **caractérisée en ce qu'elle** comporte un moyen pour reconnaître un paquet de données de type "Optimisation de label" provenant d'un serveur de labels et traversant ladite station de connexion à destination d'un poste terminal cible via un routeur relié à la station de connexion, et pour adresser au serveur de labels une indication selon laquelle le label à prendre en compte pour ce poste terminal cible est celui vers lequel ladite station de connexion fait suivre le paquet de données de type "Optimisation de label".

L'invention a enfin pour objet un système de télécommunications par satellites pour mettre en oeuvre le procédé décrit ci-dessus, **caractérisé en ce qu'il** comprend au moins un terminal satellite, au moins un serveur d'accès, au moins un satellite tels que décrits ci-dessus.

Dans un mode de réalisation particulier, le système de télécommunications comprend également au moins une station de connexion telle que décrite ci-dessus.

Afin de faciliter la compréhension de l'invention, des exemples de mise en oeuvre vont maintenant en être décrits, à l'aide des dessins annexés dans lesquels :
- la figure 1 est une représentation schématique d'une partie d'un réseau satellites,
- la figure 2 est une vue en perspective d'un terminal satellite, d'un satellite et d'une station de connexion,
- la figure 3 est une vue en perspective d'un terminal satellite, d'un satellite et d'un serveur d'accès Internet,
- la figure 4 est une vue en perspective de deux terminaux satellites reliés à deux terminaux utilisateurs, d'un satellite et d'un serveur d'accès Internet,
- la figure 5 est un schéma synoptique montrant les échanges de paquets de données entre un terminal utilisateur émetteur de données, un serveur de labels d'un serveur d'accès et un terminal utilisateur destinataire des données,
- la figure 6 est un schéma analogue à celui de la figure 5 dans lequel le terminal utilisateur destinataire des données partage le même serveur d'accès que l'émetteur,
- la figure 7 est un schéma synoptique montrant les échanges de paquets de données entre un terminal utilisateur émetteur de données, un premier serveur de labels d'un premier serveur d'accès, un second serveur de labels d'un second serveur d'accès, et un terminal utilisateur destinataire des données,
- la figure 8 est un schéma synoptique montrant les échanges de paquets de données entre un terminal utilisateur émetteur de données, un serveur de labels d'un premier serveur d'accès, un routeur et un serveur d'accès Internet relié au destinataire des données,
- la figure 9 est un schéma synoptique montrant les échanges de paquets de données entre un terminal utilisateur émetteur de données, un premier serveur de labels d'un premier serveur d'accès, un second serveur de labels d'un second serveur d'accès, un routeur et un serveur d'accès Internet relié au destinataire des données et
- la figure 10 est un schéma global d'un réseau satellites couvrant plusieurs serveurs d'accès et s'intégrant au réseau terrestre.

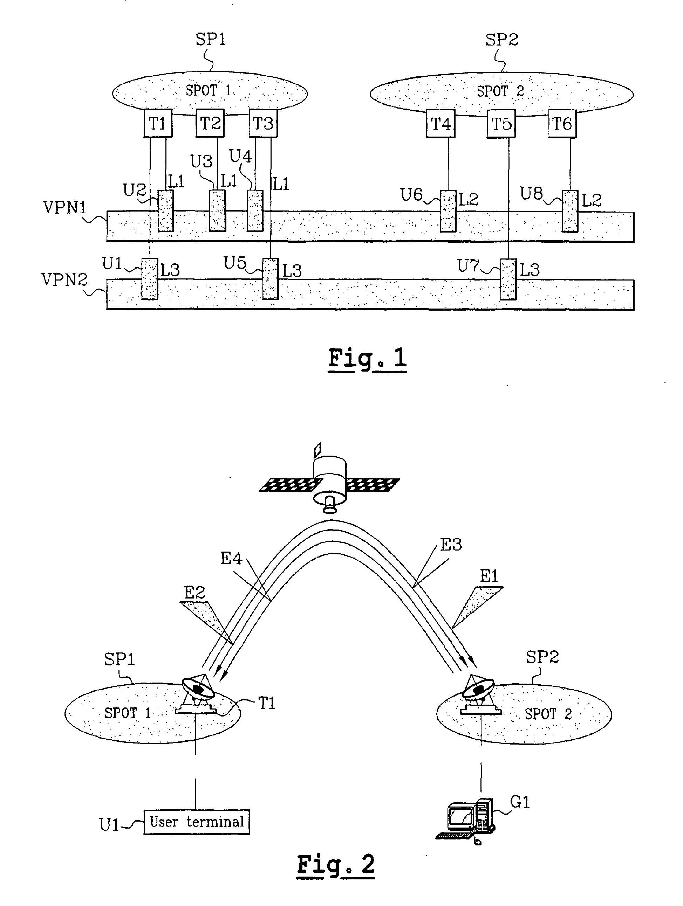

En référence à la figure 1, on va maintenant décrire les liens établis par les labels selon l'invention entre les sous-réseaux virtuels, les spots des satellites et les terminaux utilisateurs.

Pour simplifier l'explication, le réseau de l'exemple décrit se limite à un seul satellite, comportant deux spots SP1 et SP2.

Huit utilisateurs U1 à U8 sont connectés au réseau. Les utilisateurs U2, U3, U4, U6 et U8 sont regroupés dans un premier sous-réseau privé virtuel SR 1 et les utilisateurs U1, U5 et U7 sont regroupés dans un second sous-réseau privé virtuel SR 2.

Des terminaux satellites T1 à T6 permettent à un ou plusieurs terminaux d'utilisateurs de se connecter au réseau satellite, à travers l'un de ses spots. Ainsi, le terminal satellite T1 relie les deux terminaux des utilisateurs U1 et U2 au satellite par son premier spot SP1.

Chaque terminal satellite comporte sa propre table ARP de résolution d'adresses, qui est mise à jour à mesure des envois et des réceptions de données effectués par le terminal satellite, comme cela est connu dans le protocole ARP.

Dans le cas présent, la table ARP de chaque terminal satellite contient en outre un champ label, qui est mis à jour dans les mêmes conditions que les champs d'adresses matérielles de la table.

Conformément à l'invention, des labels L1, L2 et L3 sont associés aux réseaux virtuels SR 1, SR 2 et aux spots SP1, SP2 selon une table dont une représentation est donnée ci-après.

| Réseau virtuel | Label | Spots |
|---|---|---|
| SR 1 | L1 | SP1 |
| SR 1 | L2 | SP2 |
| SR 2 | L3 | SP1, SP2 |

De cette manière, lorsqu'un utilisateur désire adresser des données à un autre utilisateur, son terminal de connexion renseigne, dans l'entête d'adressage de chaque paquet de données, un champ label à la valeur correspondant à cet autre utilisateur.

Par exemple, l'utilisateur U2 appartient au réseau virtuel SR 1 et est connecté au réseau satellite par l'intermédiaire du terminal satellite T1 situé dans le spot SP1. Par conséquent, les paquets qui lui sont destinés contiendront la valeur L1 comme label.

Les figures 2 à 5 vont maintenant être commentées pour décrire une procédure d'enregistrement d'un utilisateur U1 auprès d'un serveur d'accès ISP1.

A la mise sous tension du terminal satellite T1 relié au terminal utilisateur U1, le terminal satellite doit d'abord se faire connaître du réseau satellites.

A cet effet, le terminal satellite T1 comporte une mémoire contenant les labels qui lui permettent de communiquer avec la station de connexion G1 utilisée pour gérer le système de télécommunications par satellites.

Ces labels sont :
- un label d'écoute Label_Broadcast_G1 qui permet audit terminal satellite de récupérer des données diffusées en mode diffusion par la station de connexion G1,
- un label d'envoi Label_G1 qui lui permet d'envoyer des données à la station de connexion G1.

Ces labels ont été alloués en fonction notamment des spots SP1 et SP2 dans lesquels se trouvent le terminal satellite T1 et, respectivement, la station de connexion G1.

Le label d'écoute Label_Broadcast_G1 est placé dans l'entête de toute donnée broadcast émise par la station de connexion. Ce label correspond à tous les sous-réseaux virtuels et à tous les spots du satellite. Il est présent dans la liste des labels autorisés de tous les terminaux satellites, afin que tous les utilisateurs puissent recevoir des données en mode diffusion de la part de la station de connexion G1.

Dans une variante, le label d'envoi Label_G1 n'est pas mémorisé dans le terminal satellite T1 mais est diffusé en mode diffusion par la station de connexion G1 et est récupéré par le terminal satellite à sa mise sous tension grâce au label de réception Label_Broadcast_NCC.

Pour son enregistrement dans le réseau satellites, le terminal satellite T1 envoie une demande d'enregistrement à la station de connexion G1 à l'aide du label Label_G1 (étape E1 de la figure 2).

La station de connexion G1 répond en mode diffusion au terminal satellite, à l'aide du label Label_Broadcast_G1 (étape E2 de la figure 2).

Une fois le terminal satellite enregistré auprès de la station de connexion, l'utilisateur peut s'enregistrer auprès de son serveur d'accès.

Pour cela, le terminal utilisateur U1 fournit au terminal satellite T1 le numéro correspondant au serveur d'accès ISP1.

Le terminal satellite T1 interroge la station de connexion (étape E3 de la figure 2) et récupère les labels permettant de communiquer avec le serveur d'accès ISP1 situé dans le spot SP3 (étape E4 de la figure 2), à savoir le label Label_écoute_ISP1 qui lui permet de recevoir des paquets de données en provenance du serveur d'accès ISP1 et le label Label_envoi_ISP1 qui permet l'adressage de données au serveur d'accès.

L'utilisateur peut alors s'enregistrer auprès du serveur d'accès ISP1.

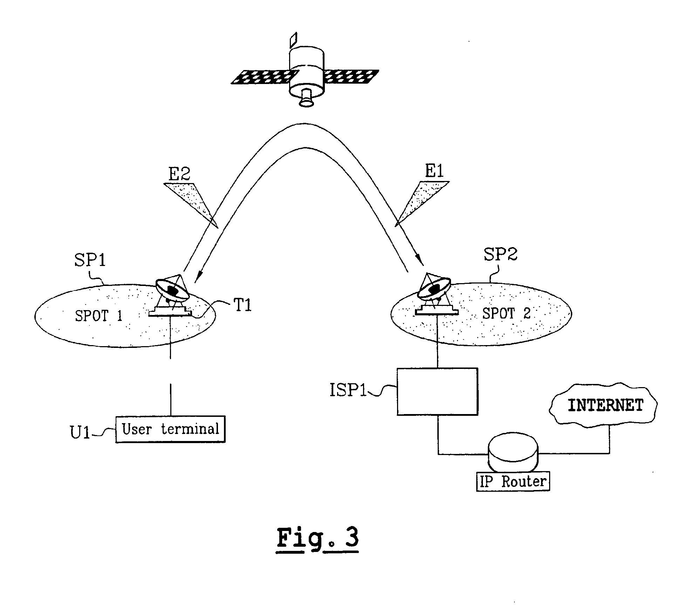

La demande d'enregistrement est adressée au serveur d'accès avec le label Label_envoi_ISP1 (étape E1 de la figure 3).

Le serveur d'accès procède aux vérifications d'autorisations prévues par l'abonnement de l'utilisateur auprès du fournisseur d'accès qui gère le serveur d'accès ISP1 et retourne (étape E2 de la figure 3), si les vérifications sont favorables, une autorisation d'enregistrement accompagnée d'un label non encore connu du terminal utilisateur : le label Label_S-ARP qui permettra à l'utilisateur d'adresser des requêtes directes au serveur centralisé de résolution d'adresses (non représenté) attaché au serveur d'accès ISP1.

En outre, le serveur d'accès peut fournir dynamiquement des labels d'écoute (Label_ec_ISP1) et d'envoi (Label_ev_ISP1) au serveur d'accès et aux réseaux satellites, labels d'écoute qui sont optimisés en fonction de la localisation de ceux-ci.

L'utilisateur est alors enregistré dans le réseau et dispose des moyens pour émettre et recevoir des paquets de données en utilisant les labels selon l'invention.

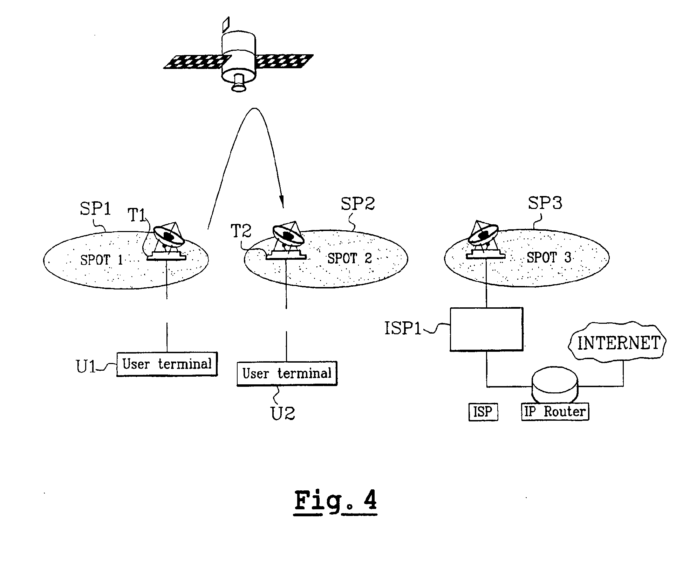

L'envoi et la réception de paquets de données se déroulent de la manière suivante, décrite en référence à la figure 4.

Pour l'envoi de données du terminal utilisateur U1 vers le terminal utilisateur U2, le terminal satellite T1 reçoit des paquets de données du terminal utilisateur U1, chacun avec une entête contenant l'adresse protocole du terminal utilisateur U2.

Si la table S-ARP du terminal satellite T1 connaît déjà l'adresse protocole du terminal utilisateur U2, le terminal satellite ajoute le champ label Label_n correspondant au terminal utilisateur U2 (c'est-à-dire traduisant le fait que ce terminal U2 appartient à un sous-réseau virtuel et est connecté à un terminal satellite T2 se trouvant dans le spot SP2) et émet le paquet de données vers le satellite.

Au niveau du satellite, les paquets de données sont reconnus comme possédant le label Label_n et sont directement dirigés vers le spot SP2.

Si la table S-ARP du terminal satellite T1 ne connaît pas l'adresse protocole du terminal utilisateur U2, il faut mettre en oeuvre le procédé de détermination dynamique du label d'un destinataire U2 de données émises par un émetteur U1.

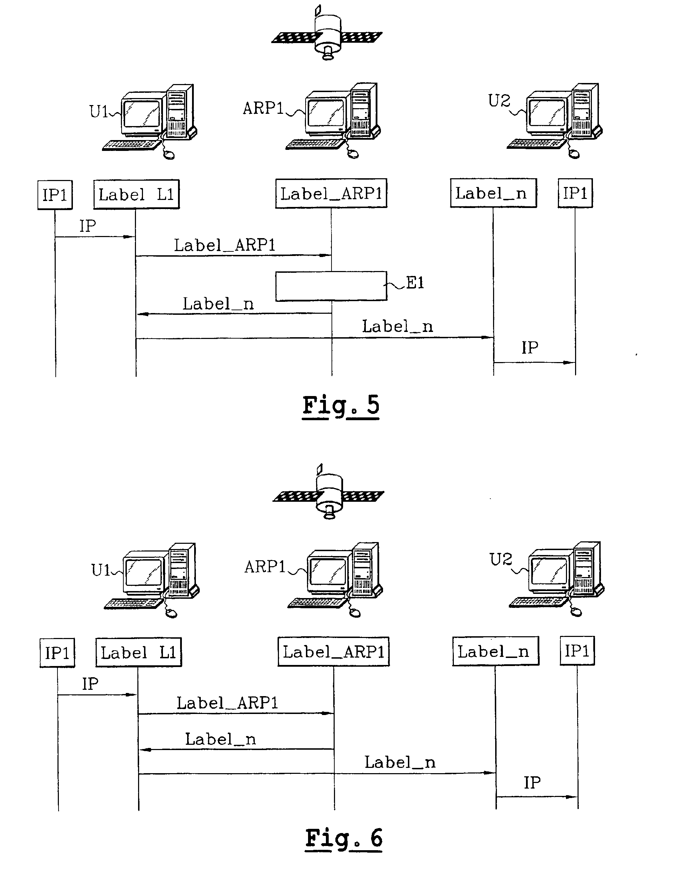

Ce procédé va être décrit en référence à la figure 5, qui représente le premier terminal utilisateur U1, le serveur de labels S-ARP1 attaché au serveur d'accès ISP1 et le second terminal utilisateur U2.

Conformément à l'invention, le terminal satellite T1 relié au terminal utilisateur U1 effectue une requête de résolution d'adresse non pas en mode diffusion, ce qui encombrerait le trafic du réseau, mais auprès du serveur centralisé de résolution d'adresses S-ARP1 en utilisant le label Label_S-ARP1.

Le serveur centralisé de résolution d'adresses S-ARP1 détermine dynamiquement, à l'étape E1, le label Label_n correspondant au terminal utilisateur U2 et fournit ce label Label_n en réponse au terminal satellite T1. Le paquet de données est traité et envoyé par le terminal satellite T1 comme précédemment décrit.

Pour la réception de données par le terminal utilisateur U1, le terminal satellite T1 dispose d'une liste de labels autorisés servant de filtre de réception. Seuls les paquets de données dont l'entête contient un label figurant sur cette liste sont traités par le terminal satellite.

Le traitement proprement dit consiste à extraire l'adresse du terminal utilisateur destinataire et à lui adresser les paquets de données.

La liste de labels autorisés est mise à jour chaque fois qu'un nouveau label est autorisé pour les terminaux utilisateurs connectés au terminal satellite, c'est-à-dire dans les occasions suivantes :
- enregistrement du terminal satellite dans le réseau,
- enregistrement d'un terminal utilisateur relié au terminal satellite auprès d'un serveur d'accès,
- connexion d'un utilisateur à un serveur,
- adhésion d'un utilisateur à un groupe multidestinataire ou à un réseau privé virtuel.

En référence aux figures 6 à 9, on va maintenant détailler le procédé dynamique de détermination de labels en fonction de la localisation physique du destinataire.

Dans le cas de la figure 6, le destinataire U2 est accessible directement via le réseau satellites. Le serveur centralisé de résolution d'adresses S-ARP1 (également désigné serveur de labels) connaît l'adresse protocole du terminal utilisateur U2 et répond à la requête de label émise par le terminal U1 en indiquant le label Label_n correspondant au terminal U2.

Le terminal U1 peut donc émettre vers le terminal U2 avec le label Label_n.

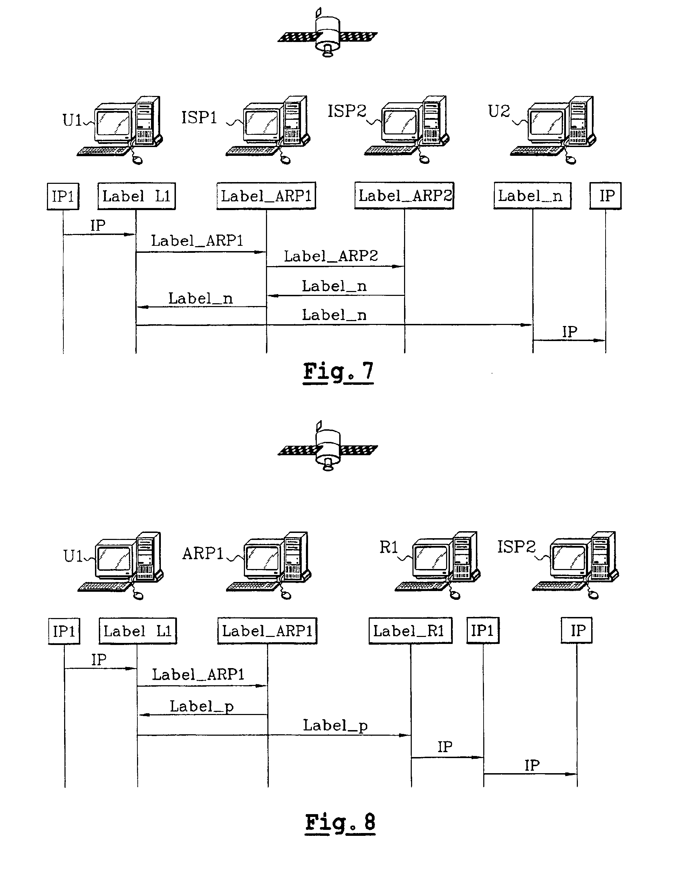

Dans le cas de la figure 7, le terminal destinataire U2 est accessible via le réseau satellites mais est enregistré auprès d'un autre serveur d'accès ISP2 que le serveur d'accès ISP1 du terminal émetteur U1.

La requête de label envoyée par U1 vers le serveur de labels S-ARP1 déclenche, de la part de ce dernier, une interrogation du serveur de labels S-ARP 2 attaché au serveur d'accès ISP2.

Cette interrogation obéit à un protocole prédéfini entre les serveurs de labels S-ARP1 et S-ARP2. En particulier, pour que le serveur de labels ARP1 sache que l'adresse du terminal U2 est utilisée sur le serveur d'accès ISP2, un plan d'adressage est établi, sous une forme statique ou sous une forme dynamique. Le plan d'adressage dynamique peut être obtenu par interrogation systématique de tous les serveurs d'accès ayant passé un accord avec le serveur d'accès ISP1, ou encore par échange dynamique d'informations entre les serveurs d'accès.

Le serveur de labels S-ARP2 retourne au serveur de labels S-ARP1 le label Label_n correspondant au terminal U2.

A son tour, le serveur de labels S-ARP1 retourne au terminal satellite du terminal U1 le label Label_n et le terminal satellite émet le ou les paquets de données en utilisant le label ainsi obtenu.

Dans le cas de la figure 8, le terminal destinataire U2 n'est pas directement accessible par le réseau satellites et l'adressage du destinataire requiert le passage par un routeur R1 vers un serveur d'accès ISP2 auprès duquel le terminal destinataire U2 est enregistré.

A la même requête initiale que précédemment, le serveur de labels S-ARP1 répond en fournissant le label Label_p correspondant au routeur R1 attaché au serveur d'accès ISP1.

L'émetteur envoie alors les données vers le terminal U2 en utilisant le label Label_p.

Les paquets de données arrivent dans le routeur R1 qui les fait suivre au destinataire U2.

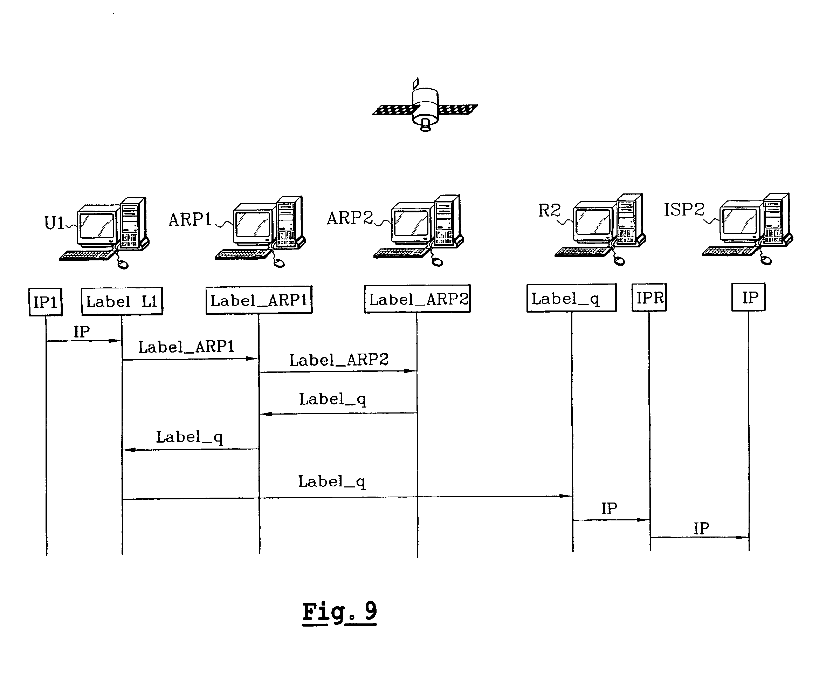

Dans le cas de la figure 9, le destinataire U2 n'est pas accessible via le réseau satellites et l'adressage du destinataire impose un passage par un routeur R2 attaché à un autre serveur d'accès ISP2 que celui de l'émetteur et auprès duquel U2 est enregistré.

La requête de label adressée au serveur S-ARP1 entraîne, de la part de ce dernier, un routage pour connaître l'adresse du routeur R2 auquel faire suivre le paquet de données.

Le serveur S-ARP1 envoie une requête de label au serveur de labels S-ARP2 du serveur d'accès ISP2.

Le serveur S-ARP2 retourne au serveur S-ARP1 le label Label_q correspondant au routeur R2 du serveur d'accès ISP2 sur lequel est enregistré le terminal utilisateur U2. Le serveur S-ARP1 répond à son tour à la requête émanant du terminal satellite relié au terminal utilisateur U1 en fournissant le label Label_q.

Le terminal utilisateur U1 peut donc adresser des données au routeur R2 en utilisant le label Label_q.

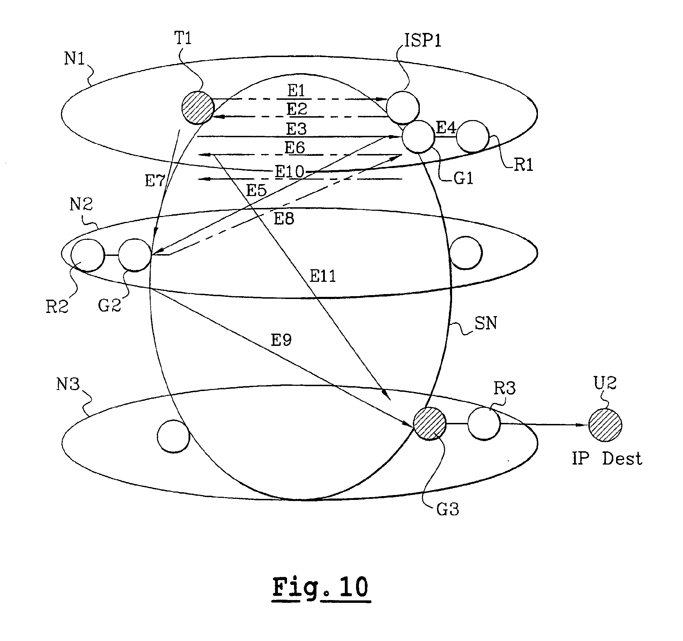

En référence à la figure 10, on va maintenant décrire un procédé d'optimisation de routage dans les cas où le destinataire n'appartient pas au réseau satellite.

Le but de cette optimisation est de joindre en un seul bond, dans le réseau satellite, le dernier routeur précédant la sortie du routage hors du réseau satellite.

Sur la figure 10, on voit :
- un terminal satellite T1 émetteur de données (pour le compte d'un terminal utilisateur non représenté), appartenant à un premier réseau N1 appuyé sur une station de connexion G1, un serveur d'accès ISP1 et son serveur de labels S-ARP1 (non représenté) et un routeur R1,
- un deuxième réseau N2 appuyé sur une station de connexion G2 et un routeur R2 qui lui est attaché,
- un troisième réseau N3 appuyé sur une station de connexion G3 et un routeur R3 qui lui est attaché, et
- un terminal U2 destinataire des données émises par U1.

Les trois réseaux N1, N2, N3 sont différents au sens où ils possèdent des stations de connexion différentes et des serveurs d'accès différents. Toutefois, il reposent sur la même infrastructure de satellites SN.

Il s'agit de réseaux dont les serveurs d'accès ont passé des accords entre eux au niveau du routage selon le protocole Internet, mais n'ont pas souhaité optimiser conjointement leur adressage satellite en vue d'un plan d'adressage et prennent le risque de voir des paquets réaliser des doubles, voire des triples bonds satellites en passant d'un routeur à un autre.

Pour connaître le label à utiliser pour adresser le terminal U2, le terminal U1 émet une requête de label au serveur de labels S-ARP1 attaché à son serveur d'accès (étape E1).

L'adresse du terminal U2 n'étant pas une adresse du réseau satellite, le serveur de labels S-ARP1 assigne le routeur R1 comme destinataire et renvoie au terminal U1 le label Label_R1 correspondant au routeur R1 (étape E2).

Le terminal U1 commence alors à envoyer des paquets de données vers le terminal U2 en utilisant le label Label_R1 (étape E3).

Dans le but d'optimiser le routage, le serveur de labels S-ARP1 envoie au routeur R1 un paquet de données de type "Optimisation de label" à destination du terminal U2 (étape E4).

Le routeur R1 détermine que ce paquet d'optimisation, à destination du terminal U2, doit être transmis au deuxième réseau N2. A cet effet, le routeur R1 renvoie le paquet d'optimisation à la station de connexion G1 vers la station de connexion G2.

La station de connexion G1 détecte le paquet d'optimisation qu'elle doit transmettre à G2 (étape E5) et réagit en avertissant le serveur de labels S-ARP1 que, pour envoyer des données au terminal U2, il convient d'utiliser le label Label_G2 de la station de connexion G2.

Le serveur de labels S-ARP1, ainsi averti, envoie au terminal U1 une information de mise à jour de sa table S-ARP de résolution d'adresses incluant le champ label (étape E6).

Le terminal T1 se met donc à envoyer des paquets de données en utilisant le label Label_G2, de sorte que les données parviennent en un seul bond du terminal T1 à la station de connexion G2 en shuntant le passage par le routeur R1 (étape E7).

La station de connexion G2 ayant reçu le paquet d'optimisation, elle détermine que l'adresse du terminal U2 n'est pas une adresse accessible par le deuxième réseau et fait suivre à son routeur R2.

Ce dernier détermine qu'il faut adresser le paquet au troisième réseau N3 et retourne donc le paquet d'optimisation à la station de connexion G2 pour émission vers le troisième réseau.

La station de connexion G2 détecte le paquet d'optimisation et avertit le serveur de labels S-ARP1 que pour adresser le terminal U2, il est préférable d'utiliser le label Label_G3 correspondant à la station de connexion G3 du troisième réseau (étape E8). Le paquet d'optimisation est transmis à la station G3 (étape E9)

Le serveur de labels S-ARP1 envoie au terminal T1 une information de mise à jour de sa table S-ARP (étape E10), et le terminal se met à envoyer des paquets de données au terminal U2 en utilisant le label Label_G3 (étape E11).

Les données arrivent donc en un seul bond à la station de connexion G3 depuis le terminal T1.

Le routeur R3 envoie le paquet d'optimisation vers le réseau terrestre où il sera détruit du seul fait que les piles de protocole ne le prennent pas en compte.

Afin d'assurer l'autodestruction du paquet d'optimisation, ce dernier a de préférence une durée de vie limitée en dehors du réseau satellite, qui ne lui permet d'être renvoyé que vers deux routeurs terrestres successifs. Concrètement, cette autodestruction est réalisée par décompte d'un compteur de re-routage qui est remis à la valeur 2 à chaque passage dans une station de connexion et qui empêche l'émission du paquet si le compteur est à zéro.

On voit que l'invention permet une utilisation optimale des réseaux satellites, en étant capable de s'adapter aux communications en mode circuit tout en tirant profit des possibilités qu'offrent les réseaux satellites pour des diffusions multidestinataires ou dans des réseaux privés virtuels.

En effet, les protocoles et la configuration des terminaux satellites sont simplifiés. Dans les stations de connexion, les fonctionnalités liées spécifiquement au système satellites sont séparées de celles qui sont les mêmes que dans un réseau terrestre. Dans les satellites, la gestion des labels est plus réduite que celle des terminaux, beaucoup plus nombreux que les labels. De plus, la mise à jour de la table des labels dans un satellite s'effectue uniquement au moment de l'allocation et de la révocation de labels par la station de connexion. Il est donc en particulier inutile de prévoir une mise à jour de cette table lors d'une connexion d'un utilisateur.

Dans un but de clarté, l'invention a été principalement décrite en référence à un transport de données selon le protocole Internet, mais l'homme du métier comprendra aisément que l'invention s'applique au transport de tous types de paquets de données.

## Revendications

1. Procédé d'adressage de paquets de données dans un réseau d'accès ou d'infrastructure satellites servant de support à des sous-réseaux (SR 1, SR 2) tels que des sous réseaux logiques IP, des réseaux privés ou des groupes multidestinataires, regroupant différents postes terminaux (U1-U8) du réseau, dans lequel chaque paquet de données est associé à une entête d'adressage et dans lequel chaque poste terminal (U1-U8) du réseau est rattaché à un terminal satellite (T1-T6) ou à une station de connexion (G1-G2) qui se trouve dans la zone de couverture d'un spot (SP1, SP2) déterminé d'un satellite déterminé, **caractérisé en ce que** l'entête d'adressage de chaque paquet de données contient en outre un champ "label" (L1, L2, L3) contenant un identifiant caractéristique d'un sous-réseau (SR 1, SR 2) auquel appartient ledit poste terminal (U1-U8) et du spot (SP1, SP2) dans lequel se trouve le terminal satellite ou la station de connexion auquel ledit poste terminal (U 1-U8) est rattaché.

2. Procédé selon la revendication 1, **caractérisé en ce que** l'envoi des paquets de données s'effectue sans connexion entre le terminal satellite émetteur (T1-T6) ou la station de connexion émettrice (G1-G2) et le terminal satellite récepteur (T1-T6) ou la station de connexion réceptrice (G1-G2).

3. Procédé selon l'une quelconque des revendications 1 et 2, **caractérisé en ce que** les postes terminaux du réseau reliés aux terminaux satellites (T1-T6) ou aux stations de connexion (G1, G2) sont constitués par des terminaux utilisateurs (U1-U8), des routeurs (R1, R2), des serveurs de données ou de services et notamment des serveurs de résolution d'adresses (S-ARP1, S-ARP2).

4. Procédé de détermination et d'optimisation de labels pour mise en oeuvre du procédé selon l'une quelconque des revendications 1 à 3, **caractérisé en ce qu'**il consiste à installer un serveur centralisé de détermination de labels (S-ARP1, S-ARP2) (désigné par la suite "serveur de labels") chez chaque serveur d'accès Internet utilisant le réseau satellite, à communiquer le label (Label_SARP1) correspondant à ce serveur de labels à chaque terminal satellite (T1-T6) ou à chaque station de connexion (G1, G2) du réseau au moment de l'enregistrement, auprès du serveur d'accès Internet, d'un utilisateur dont le terminal utilisateur (U1-U8) est relié à ce terminal satellite (T1-T6) ou à cette station de connexion (G1, G2), et à faire émettre par le terminal satellite (T1-T6), ou par la station de connexion (G1, G2), auquel (à laquelle) est relié le terminal utilisateur (U1) d'un utilisateur désirant envoyer des données vers un poste terminal cible (U2) reliée à un autre terminal satellite (T2) ou à une autre station de connexion à destination du serveur de labels (S-ARP1) de son serveur d'accès et en utilisant le label (Label_SARP1) correspondant au serveur de labels, un paquet de données de type "Requête de label" contenant l'adresse IP de la cible (U2), à faire émettre par le serveur de labels (SARP1), à destination du terminal satellite ou de la station de connexion émetteur (U1) et en utilisant le label (L1) correspondant audit émetteur, un paquet de données de type "Réponse de label" contenant le label (Label_n) du sous-réseau auquel appartient le poste terminal cible (U2).

5. Procédé selon la revendication 4, **caractérisé en ce que** le paquet de données de type "Réponse de label" fourni par le serveur de labels (S-ARP1) contient un label qui est établi en fonction de la localisation matérielle du terminal auquel est relié le poste terminal cible (U2).

6. Procédé selon l'une quelconque des revendications 4 et 5, **caractérisé par le fait que** lors d'une interrogation du serveur de labels (S-ARP1), par soumission d'un paquet de données de type "Requête de label" correspondant à une adresse de poste terminal cible (U2), si le serveur de labels trouve un label d'un routeur (R1, R2) comme réponse à la requête, ledit serveur de labels adresse audit routeur un paquet de données de type "Optimisation de label" contenant l'adresse du poste terminal cible (U2) comme adresse destinataire et toute station de connexion (G1, G2) appartenant au réseau satellites qui est sollicitée par son routeur pour faire suivre ce paquet de données de type "Optimisation de label" à un autre routeur renvoie au serveur de labels (S-ARP1) une indication selon laquelle le label de routeur (Label_R1, Label_R2) à retenir pour cette cible est le label du routeur vers lequel cette station de connexion fait suivre le paquet de données "Optimisation de label".

7. Procédé selon la revendication 6, **caractérisé en ce que** le paquet de données de type "Optimisation de label" a une durée de vie limitée en dehors du réseau satellites, afin de s'éliminer spontanément dès lors que sa transmission d'une station de connexion à une autre est considérée comme ne pouvant plus donner lieu à une optimisation du routage.

8. Procédé selon l'une quelconque des revendications 1 à 7, **caractérisé en ce que** les paquets de données sont des contenants pouvant contenir, entre autres, des paquets IP, c'est-à-dire répondant aux normes de transfert de données en mode non connecté sur des réseaux de type Internet.

9. Terminal satellite d'un système de télécommunication par satellites mettant en oeuvre le procédé selon l'une quelconque des revendications 1 à 8, **caractérisé en ce qu**'il dispose d'une table par serveur d'accès auquel sont rattachés des terminaux utilisateurs (U1-U8) reliés au terminal satellite (T1-T6), mettant en relation des adresses de terminaux utilisateurs cibles et les labels (L1,L2,L3) qui leurs sont associés et en ce qu'il écoute les labels (L1,L2,L3) de réception des sous-réseaux dont font partie les terminaux utilisateurs qui lui sont rattachés.

10. Terminal satellite selon la revendication 9, **caractérisé en ce qu**'il mémorise le label d'émission de la station de connexion auquel il est rattaché, label grâce auquel il peut émettre des paquets de données diffusées vers ladite station de connexion.

11. Terminal satellite selon l'une quelconque des revendications 9 et 10, **caractérisé en ce qu**'un poste terminal (U1-U8) et ledit terminal satellite (T1-T6) ne constituent qu'un seul et même équipement en étant réunis dans un même boîtier.

12. Terminal satellite selon la revendication 11, **caractérisé en ce que** le poste terminal est un terminal utilisateur (U1-U8) qui, avec ledit terminal satellite (T1-T6), ne constitue qu'un seul et même équipement.

13. Serveur d'accès d'un système de télécommunication par satellites mettant en oeuvre le procédé selon l'une quelconque des revendications 1 à 8, **caractérisé en ce qu'**il est attaché à un serveur de labels apte à fournir un label d'adressage en fonction d'une adresse de poste terminal cible d'un paquet de données.

14. Satellite d'un système de télécommunication par satellites mettant en oeuvre le procédé selon l'une quelconque des revendications 1 à 8, **caractérisé en ce qu'**il dispose d'une table mettant des labels attribués à des sous-réseaux en relation avec les spots de son système satellite, et d'un moyen pour émettre un paquet de données attaché à un label donné uniquement dans celui ou ceux de ses spots reliés audit label.

15. Satellite selon la revendications 14, **caractérisé en ce qu'**il contient ladite table.

16. Satellite selon la revendication 14, **caractérisé en ce que** la table est contenue par un centre de contrôle réseau.

17. Station de connexion d'un système de télécommunication mettant en oeuvre le procédé selon l'une quelconque des revendications 6 et 7, **caractérisée en ce qu'elle** comporte un moyen pour reconnaître un paquet de données de type "Optimisation de label" provenant d'un serveur de labels et traversant ladite station de connexion à destination d'une cible via un routeur relié à la station de connexion, et pour adresser au serveur de labels une indication selon laquelle le label à prendre en compte pour cette cible est celui vers lequel ladite station de connexion fait suivre le paquet de données de type "Optimisation de label".

18. Système de télécommunications par satellites pour mettre en oeuvre le procédé selon l'une quelconque des revendications 1 à 8, **caractérisé en ce qu'**il comprend au moins un terminal satellite selon l'une quelconque des revendications 9 à 12, au moins un serveur d'accès selon la revendication 13 et au moins un satellite selon l'une quelconque des revendications 14 à 16.

19. Système de télécommunications par satellites selon la revendication 18 pour mettre en oeuvre le procédé selon l'une quelconque des revendications 6 et 7, **caractérisé en ce qu**'il comprend au moins une station de connexion selon la revendication 17.

## Claims

1. A method of sending data packets in an access network or satellite infrastructure network supporting sub-networks (SR1, SR2) such as IP logical sub-networks, private networks, or multi-recipient groups, combining different terminal stations (U1-U8) of the network, in which method each data packet is associated with an addressing header and each terminal station (U1-U8) of the network is associated with a satellite terminal (T1-T6) or a ground station (G1-G2) located in the coverage of a particular spot (SP1, SP2) of a particular satellite, **characterized in that** the addressing header of each data packet further contains a "label" field (L1, L2, L3) containing an identifier characteristic of a sub-network (SR1, SR2) to which said terminal station (U1-U8) belongs and the spot (SP1, SP2) in which the satellite terminal or the ground station with which said terminal station (U1-U8) is associated is located.

2. A method according to claim 1, **characterized in that** data packets are sent with no connection between the sending satellite terminal (T1-T6) or the sending ground station (G1-G2) and the receiving satellite terminal (T1-T6) or the receiving ground station (G1-G2).

3. A method according to claim 1 or claim 2, **characterized in that** the terminal stations of the network connected to the satellite terminals (T1-T6) or to the ground stations (G1, G2) consist of user terminals (U1-U8), routers (R1, R2), and data or service servers, in particular address resolution protocol servers (S-ARP1, S-ARP2).

4. A method of determining and optimizing labels for implementing the method according to any one of claims 1 to 3, **characterized in that** it consists of installing a centralized label determination server (S-ARP1, S-ARP2) (hereinafter referred to as a "label server") in each Internet service provider using the satellite network, communicating the label (Labet_SARP1) corresponding to said label server to each satellite terminal (T1-T6) or to each ground station (G1, G2) of the network at the time of registration with the Internet service provider of a user whose user terminal (U1-U8) is connected to said satellite terminal (T1-T6) or to said ground station (G1, G2), having the satellite terminal (T1-T6) or the ground station (G1, G2) to which is connected the user terminal (U1) of a user requiring to send data to a target terminal station (U2) connected to another satellite terminal (T2) or another ground station send to the label server (S-ARP1) of its Internet service provider, using the label (Label_SARP1) corresponding to the label server, a "Label request" data packet containing the IP address of the target (U2), and having the label server (S-ARP1) send to the satellite terminal or to the sending ground station (U1), using the label (L1) corresponding to said sender, a "Label response" data packet containing the label (Label_n) of the sub-network to which the target terminal station (U2) belongs.

5. A method according to claim 4, **characterized in that** the "Label response" data packet supplied by the label server (S-ARP1) contains a label that is established as a function of the hardware location of the terminal to which the target terminal station (U2) is connected.

6. A method according to claim 4 or claim 5, **characterized in that**, during interrogation of the label server (S-ARP1) by submitting a "Label request" data packet corresponding to a target terminal station address (U2), if the label server finds a label of a router (R1, R2) by way of response to the request, said label server sends said router a "Label optimization" data packet containing the address of the target terminal station (U2) by way of a destination address and any ground station (G1, G2) belonging to the satellite network that is used by its router to forward said "Label optimization" data packet to another router sends back to the label server (S-ARP1) an indication to the effect that the router label (Label_R1, Label_R2) to be retained for that target is the label of the router to which said ground station forwards the "Label optimization" data packet.

7. A method according to claim 6, **characterized in that** the "Label optimization" data packet has a limited lifetime outside the satellite network in order for it to be eliminated spontaneously as soon as transmitting it from one ground station to another is no longer considered to be able to optimize the routing.

8. A method according to any one of claims 1 to 7, **characterized in that** the data packets are containers adapted to contain, among other things, IP packets, i.e. packets conforming to the standards for transfer of data in non-connected mode over Internet Protocol networks.

9. A satellite terminal of a satellite telecommunications system using the method according to any one of claims 1 to 8, **characterized in that** it has a table for each Internet service provider with which are associated user terminals (U1-U8) connected to satellite terminals (T1-T6), said table establishing the relationship between target user terminal addresses and the labels (L1, L2, L3) associated with them, and **in that** it listens to receiving labels (L1, L2, L3) of sub-networks to which the user terminals associated with it belong.

10. A satellite terminal according to claim 9, **characterized in that** it stores the sending label of the ground station with which it is associated, by means of which label it can send broadcast data packets to said ground station.

11. A satellite terminal according to claim 9 or claim 10, **characterized in that** a terminal station (U1-U8) and said satellite terminal (T1-T6) constitute one and the same equipment unit and are combined in the same device.

12. A satellite terminal according to claim 11, **characterized in that** the terminal station is a user terminal (U1-U8) which, with said satellite terminal (T1-T6), constitutes one and the same equipment unit.

13. An Internet service provider of a satellite telecommunications system implementing the method according to any one of claims 1 to 8, **characterized in that** it is associated with a label server adapted to supply an addressing label as a function of a target terminal station address of a data packet.

14. A satellite of a satellite telecommunications system implementing the method according to any one of claims 1 to 8, **characterized in that** it has access to a table establishing the relationship between labels allocated to sub-networks and the spots of its satellite system and means for sending a data packet associated with a given label only in the spot or spots linked to said label.

15. A satellite according to claim 14, **characterized in that** it contains said table.

16. A satellite according to claim 14, **characterized in that** the table is contained in a network control center.

17. A ground station of a telecommunications system implementing the method according to claim 6 or claim 7, **characterized in that** it includes means for recognizing a "Label optimization" data packet coming from a label server and passing through said ground station to a target via a router connected to the ground station, and for sending the label server an indication to the effect that the label to be taken into account for said target is that to which said ground station forwards the "Label optimization" data packet.

18. A satellite telecommunications system for implementing the method according to any one of claims 1 to 8, **characterized in that** it includes at least one satellite terminal according to any one of claims 9 to 12, at least one Internet service provider according to claim 13, and at least one satellite according to any one of claims 14 to 16.

19. A satellite telecommunications system according to claim 18 for implementing the method according to claim 6 or claim 7, **characterized in that** it includes at least one ground station according to claim 17.

## Patentansprüche

1. Verfahren zur Adressierung von Datenpaketen in einem Anschaltenetz oder einer Satelliten-Infrastruktur, das als Unterstützung für Unternetze (SR 1, SR 2), wie beispielsweise logische Unternetze IP, private Netze oder Gruppen mit mehreren Empfängern dienen, in dem verschiedene Datenendeinrichtungen (U1-U8) des Netzes zusammengefasst sind, in dem jedes Datenpaket einem Adressheader zugeordnet ist und in denen jede Datenendeinrichtung U1-U8) des Netzes an eine Satellitenstation (T1-T6) oder eine Verbindungsstation (G1-G2) angeschlossen ist, die sich im Abdeckungsbereich eines bestimmten Spots (SP1, SP2) eines bestimmten Satelliten befindet, **dadurch gekennzeichnet, dass** der Adressheader jedes Datenpakets außerdem ein "Label"-Feld (L1, L2, L3) enthält, das die charakteristische Kennung des Unternetzes (SR 1, SR 2), zu dem die genannte Datenendeinrichtung (U1-U8) gehört, und des Spots (SP1, SP2) beinhaltet, in dem sich die Satellitenstation oder die Verbindungsstation befindet, an die die genannte Datenendeinrichtung (U1-U8) angeschlossen ist.

2. Verfahren gemäß Anspruch 1, **dadurch gekennzeichnet, dass** der Versand von Datenpaketen verbindungslos zwischen der Sender-Satellitenstation (T1-T6) oder der Sender-Anschlussstation (G1-G2) und der Empfänger-Satellitenstation (T1-T6) oder der Empfänger-Anschlussstation (G1-G2) erfolgt.

3. Verfahren gemäß einem beliebigen der Ansprüche 1 und 2, **dadurch gekennzeichnet, dass** die Datenendeinrichtungen des Netzes, die mit den Satellitenstationen (T1-T6) oder den Anschlussstationen (G1, G2) verbunden sind, aus Nutzerendgeräten (U1-U8), Routern (R1, R2), Daten- oder Diensteservern sowie insbesondere aus Adressauflösungsservern (S-ARP1, S-ARP2) bestehen.

4. Verfahren zur Bestimmung und Optimierung von Labeln zur Umsetzung des Verfahrens gemäß einem beliebigen der Ansprüche 1 bis 3, **dadurch gekennzeichnet, dass** es darin besteht, einen zentralen Server zur Bestimmung von Labeln (S-ARP1, S-ARP2) (im Folgenden als "Label-Server" bezeichnet) in jedem Internet-Zugangsserver zu installieren, der das Satellitennetz nutzt, das diesem Label-Server entsprechende Label (Label_SARP1) eines Benutzers, dessen Benutzerstation (U1-U8) mit dieser Satellitenstation (T1-T6) oder mit dieser Verbindungsstation (G1, G2) verbunden ist, zum Zeitpunkt der Speicherung im Internet-Zugangsserver an jede Satellitenstation (T1-T6) oder an jede Verbindungsstation (G1, G2) des Netzes zu übermitteln, und die Satellitenstation (T1-T6) oder die Verbindungsstation (G1, G2), mit der das Nutzerendgerät (U1) eines Benutzers verbunden ist, der Daten an eine Ziel-Datenendeinrichtung (2) senden will, die mit einer anderen Satellitenstation (T2) oder mit einer anderen Verbindungsstation verbunden ist, ein Datenpaket vom Typ "Labelanfrage", das die IP-Adresse des Ziels (U2) umfasst, an den Label-Server (S-ARP1) seines Zugangsservers senden zu lassen und dabei das diesem Label-Server entsprechende Label (Label_SARP1) zu verwenden, den Label-Server (SARP1) ein Datenpaket vom Typ "Labelantwort", das Label (Label_n) des Unternetzes umfasst, zu dem die Ziel-Datenendeinrichtung (U2) gehört, an die Satellitenstation oder die Verbindungsstation (U1) senden zu lassen und dabei das dem Sender entsprechende Label (L1) zu verwenden.

5. Verfahren gemäß Anspruch 4, **dadurch gekennzeichnet, dass** das Datenpaket vom Typ "Labelantwort", das vom Label-Server (S-ARP1) geliefert wird, ein Label umfasst, das in Abhängigkeit von dem physischen Standort der Station erstellt wird, mit dem die Ziel-Datenendeinrichtung (U2) verbunden ist.

6. Verfahren gemäß einem beliebigen der Ansprüche 4 und 5, **gekennzeichnet durch** die Tatsache, dass bei einer Abfrage des Label-Servers (S-ARP1) **durch** Vorlage eines Datenpakets vom Typ "Labelanfrage", das einer Adresse der Ziel-Datenendeinrichtung (U2) entspricht, der genannte Label-Server ein Datenpaket vom Typ "Label-Optimierung" an den genannten Router übermittelt, das die Adresse der Ziel-Datenendeinrichtung (U2) als Zieladresse enthält, wenn der Label-Server das Label eines Routers (R1, R2) als Antwort auf die Anfrage ermittelt, und jede Verbindungsstation (G1, G2), die zu dem Satellitennetz gehört und von dem Router angefordert wird, um dieses Datenpaket vom Typ "Label-Optimierung" an einen anderen Router weiterzuleiten, sendet an den Label-Server (S-ARP1) eine Angabe zurück, der zufolge es sich bei dem für dieses Ziel gewählten Router-Label (Label_R1, Label-R2) um das Label des Routers handelt, an den diese Station das Datenpaket "Label-Optimierung" weiterleitet.

7. Verfahren gemäß Anspruch 6, **dadurch gekennzeichnet, dass** das Datenpaket vom Typ "Labeloptimierung" außerhalb des Satellitennetzes eine eingeschränkte Lebensdauer aufweist, so dass es sich selbst löscht, sobald die Übertragung von einer Verbindungsstation zu einer anderen keinen Anlass mehr für eine Optimierung der Leitweglenkung bietet.

8. Verfahren gemäß einem beliebigen der Ansprüche 1 bis 7, **dadurch gekennzeichnet, dass** es sich bei den Datenpaketen um aufnehmende Elemente handelt, die unter anderem IP-Pakete aufnehmen können, d.h. sie entsprechen den Normen für eine Datenübertragung im verbindungslosen Modus in Netzen vom Typ Internet.

9. Satellitenstation eines Satelliten-Telekommunikationssystems, in der das Verfahren gemäß einem beliebigen der Ansprüche 1 bis 8 umgesetzt wird, **dadurch gekennzeichnet, dass** sie über eine Tabelle pro Zugangsserver verfügt, an den Nutzerendgeräte (U1-U8) angeschlossen sind, die mit der Satellitenstation (T1-T6) verbunden sind, die die Adressen der Ziel-Nutzerendgeräte und die ihnen zugeordneten Label (L1, L2, L3) in Beziehung setzen, sowie **dadurch**, dass sie die Empfangslabels (L1, L2, L3) der Unternetze abhört, zu denen die damit verbundenen Nutzerendgeräte gehören.

10. Satellitenstation gemäß Anspruch 9, **dadurch gekennzeichnet, dass** sie das Sendelabel der Verbindungsstation, an die sie angeschlossen ist, speichert, ein Label, mit dessen Hilfe sie die an die genannte Verbindungsstation übertragenen Datenpakete versenden kann.

11. Satellitenstation gemäß einem beliebigen der Ansprüche 9 und 10, **dadurch gekennzeichnet, dass** eine Datenendeinrichtung (U1-U8) und die genannte Satellitenstation (T1-T6) nur eine einzige Einheit darstellen, die in einem gemeinsamen Gehäuse angeordnet ist.

12. Satellitenstation gemäß Anspruch 11, **dadurch gekennzeichnet, dass** es sich bei der Datenendeinrichtung um ein Nutzerendgerät (U1-U8) handelt, das mit der genannten Satellitenstation (T1-T6) eine einzige Einheit bildet.

13. Zugangsserver eines Satelliten-Telekommunikationssystems, in dem das Verfahren gemäß einem beliebigen der Ansprüche 1 bis 8 umgesetzt wird, **dadurch gekennzeichnet, dass** er mit einem Labelserver verbunden ist, der in der Lage ist, ein Adresslabel in Abhängigkeit von einer Adresse der Ziel-Datenendeinrichtung eines Datenpakets zu liefern.

14. Satellit eines Satelliten-Telekommunikationssystems, in dem das Verfahren gemäß einem beliebigen der Ansprüche 1 bis 8 umgesetzt wird, **dadurch gekennzeichnet, dass** er über eine Tabelle verfügt, in der die den Unternetzen zugeordneten Label mit den Spots des Satellitensystems in Verbindung gesetzt werden, sowie über eine Vorrichtung zum Versand von Datenpaketen, die einem gegebenen Label zugeordnet sind, nur an den oder die Spots, die mit dem genannten Label verbunden sind.

15. Satellit gemäß Anspruch 14, **dadurch gekennzeichnet, dass** er die genannte Tabelle umfasst.

16. Satellit gemäß Anspruch 14, **dadurch gekennzeichnet, dass** die Tabelle in einer Netzsteuerzentrale enthalten ist.

17. Verbindungsstation eines Telekommunikationssystems, in der das Verfahren gemäß einem beliebigen der Ansprüche 6 und 7 umgesetzt wird, **dadurch gekennzeichnet, dass** sie eine Vorrichtung zur Erkennung eines Datenpakets vom Typ "Labeloptimierung" umfasst, das von einem Labelserver stammt und die genannte Verbindungsstation in Richtung eines Ziels über einen Router durchläuft, der mit der Verbindungsstation verbunden ist, sowie zur Adressierung einer Angabe an den Labelserver, der zufolge es sich bei dem für dieses Ziel zu berücksichtigenden Label um das Label handelt, an das die genannte Verbindungsstation das Datenpaket vom Typ "Labeloptimierung" weiterleitet.

18. Satelliten-Telekommunikationssystem zur Umsetzung des Verfahrens gemäß einem beliebigen der Ansprüche 1 bis 8, **dadurch gekennzeichnet, dass** es mindestens eine Satellitenstation gemäß einem beliebigen der Ansprüche 9 bis 12, mindestens einen Zugangsserver gemäß Anspruch 13 und mindestens einen Satelliten gemäß einem beliebigen der Ansprüche 14 bis 16 umfasst.

19. Satelliten-Telekommunikationssystem gemäß Anspruch 18 zur Umsetzung des Verfahrens gemäß einem beliebigen der Ansprüche 6 und 7, **dadurch gekennzeichnet, dass** es mindestens eine Anschlussstation gemäß Anspruch 17 umfasst.
